# EUROPEAN PATENT APPLICATION

(11) **EP 4 786 740 A1**
(43) Date of publication of application: **05.08.2026**
(21) Application number: 26153822.7
(22) Date of filing: 23.01.2026
(51) Int. Cl.: F01D 11/08, F01D 25/12, F01D 25/24, C04B 35/50

(54) **CMC COMPONENT, BOAS ASSEMBLY, METHOD OF CONTROLLING COOLING AIR FLOW WITHIN A CMC COMPONENT, AND TURBINE ENGINE**

(30) Priority: 23.01.2025 US 202519035161
(71) Applicant: RTX Corporation, Farmington, CT 06032 (US)
(72) Inventor: SCHNEIDER, Alex J., Manchester, 06042 (US); LUTJEN, Paul M., Kennebunkport, 04046 (US); SMIDDY, Winston, South Windsor, 06074 (US); WILKINS, Peter, Glastonbury, 06033 (US)
(74) Representative: Dehns

(57) **Abstract**

A ceramic matrix composite (CMC) component (200) for a turbine engine (20) includes at least one cooling cavity (260) having a cooling cavity opening (262) and defined by side walls (264) and a cavity bottom wall (266), and a cover plate (270) covering the cooling cavity opening (262). The cover plate has one or more cooling air inlets (275, 285) to permit cooling air to flow from a region above the cover plate into the cooling cavity. The cover plate further has one or more walls (280) extending downward from an inner surface of the cover plate to the cavity bottom wall thereby dividing the cooling cavity into a plurality of cooling channels or cooling subcavities (290, 292, 295), and/or creating a circuitous cooling pathway within the cooling cavity (260).
The CMC component is a blade outer air seal (BOAS) segment. A BOAS assembly comprising a plurality of the BOAS segments arranged to form an annular shaped structure.
A method of controlling cooling air flow within a CMC component for a turbine engine includes providing the CMC component; and covering the cooling cavity opening of the cooling cavity with the cover plate.
The turbine engine includes a fan section (22), a compressor section (24), a combustion chamber (26), and a turbine section (28), the turbine section (28) including at least one rotor and one or more turbine blade(s) extending radially outwardly from the at least one rotor; and the blade outer air seal assembly positioned between the one or more turbine blade(s) and an outer casing to the engine.

## Description

### FIELD OF THE INVENTION

The present disclosure relates generally to methods for manufacturing ceramic matrix composites (CMCs). In particular, the present disclosure concerns manufacturing CMC components with structures to facilitate cooling and directing/controlling the flow of cooling air.

### BACKGROUND OF THE INVENTION

Gas turbine engines, in general, include a fan section, a compressor section, a combustion section, and a turbine section. Air enters through the fan section and is compressed in the compressor section before being introduced into the combustion section. In the combustion section, the air is mixed with fuel and ignited to generate a high-energy, high temperature gas flow. The high-energy, high temperature gas flow is expanded in the turbine section which is used to create thrust and to drive the compressor and fan sections.

Certain components of gas turbine engines are thus exposed to the high-energy, high temperature gas flow (flow path components). Therefore, it is desirable that such flow path components be made of heat resistant materials, for example, superalloys and ceramic matrix composites (CMCs). While these materials are heat resistant, to increase the operational lifespan of turbine engine components these materials can be provided with structures to permit the flow of cooling fluid (e.g., cooling air) to interact with and cool the component.

While CMC materials can withstand much higher operating temperatures than components composed of superalloys, CMCs have comparably lower thermal conductivity than superalloys. Thus, it is particularly desirable to take steps to efficiently cool CMC components using available cooling air flows. For example, CMC components can be provided with cooling cavities to allow cooling air to penetrate into the interior of the CMC component and provide cooling thereof. Controlling flow into and within the cooling cavities can increase the efficiency of the cooling process.

There is thus a continuing need for providing alternative and/or improved cooling structures and methods for manufacturing such cooling structures in CMC that allow for efficient and effective cooling of CMC components exposed to high temperature gas flow.

### SUMMARY OF THE INVENTION

In general, the present invention relates to methods and devices for directing cooling air in conjunction with cooling CMC components, particularly cover plates used for directing/controlling cooling air flow within cooling cavities of CMC components such as blade outer air seals (BOAS).

The present invention is directed, in a first aspect, to a ceramic matrix composite (CMC) component comprising:
a ceramic matrix composite substrate having a radial outer surface and a radial inner surface inward surface, the substrate comprising a plurality of ceramic fiber plies and a ceramic matrix,
at least one cooling cavity within the substrate that extends from the outer radial surface of the substrate into an interior region of the substrate, the at least one cooling cavity having a cavity opening at the outer radial surface of the substrate, and the at least one cooling cavity being defined by cavity side walls and a cavity bottom wall, and
a cover plate covering the cavity opening of the at least one cooling cavity, the cover plate having one or more cooling air inlets to permit cooling air to flow from a region above the cover plate into the cooling cavity, the cover plate having an outer surface facing the region above the cover plate and an inner surface facing the cavity bottom wall;
wherein the cover plate further comprises one or more walls extending downward from the inner surface of the cover plate to the cavity bottom wall thereby dividing the cooling cavity into a plurality of cooling subcavities and/or creating a circuitous cooling pathway within the cooling cavity.

The present invention is also directed, in a further aspect, to a method of controlling cooling air flow within a CMC component, the method comprising:
providing a CMC component comprising:
   a base having a radial outer surface and a radial inner surface inward surface, the base comprising a plurality of ceramic fiber plies and a ceramic matrix, and
   at least one cooling cavity within the base that extends from the outer radial surface of the base into an interior region of the base, the at least one cooling cavity having a cavity opening at the outer radial surface of the base, and the at least one cooling cavity being defined by cavity side walls and a cavity bottom wall, and
covering the cavity opening of the at least one cooling cavity with a cover plate, the cover plate having one or more cooling air inlets to permit cooling air to flow from a region above the cover plate into the cooling cavity, the cover plate having an outer surface facing the region above the cover plate and an inner surface facing the cavity bottom wall;
wherein the cover plate further comprises one or more walls extending downward from the inner surface of the cover plate to the cavity bottom wall thereby dividing the cooling cavity into a plurality of cooling subcavities and/or creating a circuitous cooling pathway within the cooling cavity.

The present invention is further directed, in an additional aspect, to a turbine engine comprising:
a fan section, a compressor section, a combustion chamber, and a turbine section, the turbine section including at least one rotor and one or more turbine blade(s) extending radially outwardly from the at least one rotor; and
a blade outer air seal assembly positioned between the one or more turbine blade(s) and an outer casing to the engine;
wherein the blade outer air seal assembly is formed of a plurality blade outer air seal segments, wherein each blade outer air seal segment comprises:
   a ceramic matrix composite substrate having a radial outer surface and a radial inner surface inward surface, the substrate comprising a plurality of ceramic fiber plies and a ceramic matrix,
   at least one cooling cavity within the substrate that extends from the outer radial surface of the substrate into an interior region of the substrate, the at least one cooling cavity having a cavity opening at the outer radial surface of the substrate, and the at least one cooling cavity being defined by cavity side walls and a cavity bottom wall, and
   a cover plate covering the cavity opening of the at least one cooling cavity, the cover plate having one or more cooling air inlets to permit cooling air to flow from a region above the cover plate into the cooling cavity, the cover plate having an outer surface facing the region above the cover plate and an inner surface facing the cavity bottom wall;
wherein the cover plate further comprises one or more walls extending downward from the inner surface of the cover plate to the cavity bottom wall thereby dividing the cooling cavity into a plurality of cooling subcavities and/or creating a circuitous cooling pathway within the cooling cavity.

In an embodiment of the above, the base is made of a SiC/SiC composite.

In an embodiment according to any of the previous embodiments, the one or more walls extending downward from the inner surface of the cover plate divide the cooling cavity into a plurality of cooling subcavities.

In an embodiment according to any of the previous embodiments, the one or more walls extending downward from the inner surface of the cover plate create a circuitous cooling pathway within the cooling cavity.

In an embodiment according to any of the previous embodiments, the substrate further includes at least one cooling air outlet channel that provides fluid communication between an interior of the at least one cooling cavity beneath the cover plate and an exterior of the CMC component.

In an embodiment according to any of the previous embodiments, the one or more walls extending downward from the inner surface of the cover plate to the cavity bottom wall divide the cooling cavity into a plurality of cooling subcavities, and each cooling subcavity has at least one cooling air inlet in the cover plate and at least one cooling air outlet.

In an embodiment according to any of the previous embodiments, the one or more walls extending downward from the inner surface of the cover plate to the cavity bottom create a circuitous cooling pathway within the cooling cavity, the pathway having a first end and a second end, and the cooling plate having at least one cooling air inlet for introducing air into the first end of the pathway and further having at least one cooling air outlet for discharging air from the second end of the pathway.

In an embodiment according to any of the previous embodiments, the one or more walls extending downward from the inner surface of the cover plate have a constant height such that the depth of the cooling cavity beneath the cover plate is uniform.

In an embodiment according to any of the previous embodiments, the one or more walls extending downward from the inner surface of the cover plate have a varying height such that the cover plate is angled with respect to the bottom wall of the cooling cavity and the depth of the cooling cavity beneath the cover plate varies.

In an embodiment according to any of the previous embodiments, the cover plate is made from ceramic matrix composite material or from metallic material.

In an embodiment according to any of the previous embodiments, the cover plate is made Ni-based or Co-based superalloy metal.

In an embodiment according to any of the previous embodiments, the bottom wall of the cooling cavity is provided with a machinable coating.

In an embodiment according to any of the previous embodiments, the machinable coating comprises a mullite layer.

In an embodiment according to any of the previous embodiments, the component is a combustor liner.

In an embodiment according to any of the previous embodiments, the component is a blade outer air seal (BOAS) segment.

In an embodiment according to any of the previous embodiments, the component is a BOAS assembly comprising a plurality of BOAS segments arranged to form an annular shaped structure.

### BRIEF DESCRIPTION OF FIGURES

The features of the disclosure believed to be novel and the elements characteristic of the invention are set forth with particularity in the appended claims. The figures are for illustration purposes only and are not drawn to scale. The disclosure itself, however, both as to organization and method of operation, can best be understood by reference to the description of the preferred embodiment(s) which follows, taken in conjunction with the accompanying drawings in which:
Fig. 1 schematically illustrates a partial cross section of an exemplary gas turbine engine.
Fig. 2 is a perspective view of a blade outer air seal (BOAS) segment.
Fig. 3 is cross sectional view of an embodiment of a BOAS segment having a cover plate of the present disclosure with walls for cavity segmentation.
Fig. 4 is a cross sectional view of an embodiment of a section of a cover plate of the present disclosure with cavity segmentation wall.
Fig. 5 is a cross sectional view of another embodiment of a section of a cover plate of the present disclosure with cavity segmentation wall.
Fig. 6 is a top perspective view of the cover plate of Fig. 3.
Fig. 7 is a top view of the cover plate of Fig. 3.
Fig. 8 is a bottom perspective view of another embodiment of the cover plate of the present disclosure.
Fig. 9 is a top view of a further embodiment of the cover plate of the present disclosure.

### DETAILED DESCRIPTION OF THE INVENTION

The embodiments of the present disclosure can comprise, consist of, and consist essentially of the features and/or steps described herein, as well as any of the additional or optional ingredients, components, steps, or limitations described herein or would otherwise be appreciated by one of skill in the art. It is to be understood that all concentrations disclosed herein are by weight percent (wt. %.) based on a total weight of the composition unless otherwise indicated.

Before explaining at least one embodiment of the inventive concepts disclosed herein in detail, it is to be understood that the inventive concepts are not limited in their application to the details of construction and the arrangement of the components or steps or methodologies set forth in the following description or illustrated in the drawings. In the following detailed description of the embodiments of the inventive concepts, numerous specific details are set forth in order to provide a more thorough understanding of the inventive concepts. It will be apparent to one skilled in the art, however, having the benefit of the instant disclosure that the inventive concepts disclosed herein may be practiced without these specific details.

While the discussion below often makes reference to BOAS and BOAS segments, it should be recognized that the present disclosure is not limited to BOAS but includes other CMC components used within jet engines that may be exposed to high temperature gas flows, for example, other seals, vane airfoils and platforms therefor, and combustor liners.

In the discussion below, axial refers to a direction that coincides with the longitudinal axis of the engine. Radial refers to a direction that is radial with respect to the longitudinal axis of the engine. Circumferential refers to a direction that corresponds to the circumference of a circle around the longitudinal axis of the engine. The leading edge/portion of a structure is the edge/portion that faces in the direction toward the flow of the hot gases, i.e., faces upstream. The trailing edge/portion of a structure is the edge/portion that the faces in the direction away from the flow of the hot gases, i.e., faces downstream.

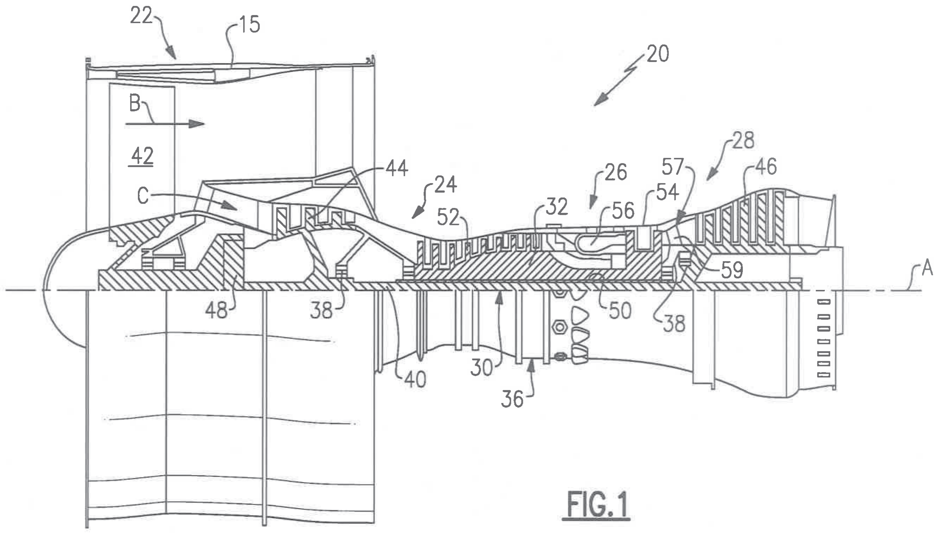

Fig. 1 schematically illustrates an example of a gas turbine engine 20 (i.e., a two-spool turbofan) which includes a fan section 22, a compressor section 24, a combustor section 26, and a turbine section 28. Fan section 22 drives air along a bypass flow path B in a bypass duct defined within a housing 15, and also along a core flow path C for compression in compressor section 24, with subsequent introduction into combustor section 26, followed by expansion through turbine section 28. Although Fig. 1 depicts a two-spool turbofan gas turbine engine, it should be understood that the concepts described herein are not limited to use with two-spool turbofans engines and may be applied to other types of turbine engines.

Engine 20 generally includes a low speed spool 30 and a high speed spool 32 mounted for rotation about an engine central longitudinal axis A, relative to an engine static structure 36, via several bearing systems 38. Various bearing systems 38 at various locations may alternatively or additionally be provided. The location of bearing systems 38 may be varied as appropriate to the application.

The low speed spool 30 generally includes an inner shaft 40 that interconnects, a first (or low) pressure compressor 44 and a first (or low) pressure turbine 46. Inner shaft 40 is connected to fan 42 through a speed change mechanism, which in this exemplary embodiment is illustrated as a geared structure 48 to drive fan 42 at a lower speed than the low speed spool 30. High speed spool 32 includes an outer shaft 50 that interconnects a second (or high) pressure compressor 52 and a second (or high) pressure turbine 54. Combustor 56 is positioned between high pressure compressor 52 and high-pressure turbine 54. A mid-turbine frame 57 of the engine static structure 36 may be arranged generally between the high-pressure turbine 54 and the low-pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core air flow is first compressed by low pressure compressor 44, and then by the high-pressure compressor 52. Thereafter, the core air flow is mixed and burned with fuel in combustor 56, then expanded in high pressure turbine 54 and low-pressure turbine 46. The mid-turbine frame 57 includes airfoils 59 which are in the core airflow path C. The turbines 46 and 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low-pressure compressor, or aft of the combustor section 26 or even aft of turbine section 28, and fan 42 may be positioned forward or aft of the location of gear system 48.

The turbine section 28 includes at least one rotor and at least one blade extending radially outwardly from the rotor. The turbine section 28 may further include a blade outer air seal(s) (BOAS(s)). The blade outer air seal can be an assembly of a plurality of BOAS segments that together form an annular shaped shroud around the engine's central longitudinal axis A which is positioned between an outer casing of the engine and the turbine blade(s) of the turbine section.

As noted above, jet engine components, such as BOAS, BOAS segments, other seals, vane airfoils and platforms therefor, blade airfoils and platforms therefor, and combustor liners, can be made from CMC materials. In general, these CMC components are prepared by first creating a CMC preform which serves as the initial framework for creating the CMC component. The preform contains a stack of fabric sheets or plies in which the stack is formed via a layup process. The plies are made from ceramic fibers, or bundles of ceramic fibers called tows, held together with a binder. The fiber tows can be in the form of unidirectional tows or can be woven fibers. For example, the fibers can be woven into a two-dimensional fabric sheet or ply and then the plies are stacked during the layup process to form the preform. Alternatively, the preform can be in the form of a three-dimensional weave wherein, for example, a plurality of warp fibers are interwoven through a plurality of weft fiber layers. Binders can be used to help hold the fibers/plies together to provide a certain rigidity to the preform, for example, polymeric binders such as polyvinyl alcohol (PVA) or polyvinyl butyral (PVB).

The fibers/filaments used in the CMC preforms may be, for example, silicon carbide (SiC), carbon, mullite, zirconium carbide (ZrC), hafnium carbide (HfC), silicon nitride, aluminum oxide, or combinations thereof. The ceramic fibers may also be oxycarbide-, oxynitride-, carbonitride-, silicate-, boride-, phosphide-, or oxide-based fibers. In still further examples, the fibers are fully crystalline, partially crystalline, or predominantly amorphous or glassy. In one particular example, the fibers are SiC fibers.

After the CMC preform is formed by the layup, the preform is subjected to densification to add matrix material to fill the remaining void spaces within the preform. This procedure stiffens and strengthens the fiber layers or woven plies of ceramic fiber tows to form the CMC. Thus, densification involves reducing the porosity within the preform, making it more solid and robust, by filing the remaining pores within the preform. The goal is to achieve a higher relative density, and ensure that the final CMC structure is compact and free of large voids. In one particular example, the CMC material contains SiC fibers within a SiC matrix, also referred to as a SiC/SiC composite.

Various methods can be used to add matrix material during densification. These include, but are not limited to, chemical vapor infiltration (CVI), melt infiltration (MI), for example, reactive melt infiltration (RMI) (such as liquid silicon infiltration (LSI)), and polymer infiltration and pyrolysis (PIP).

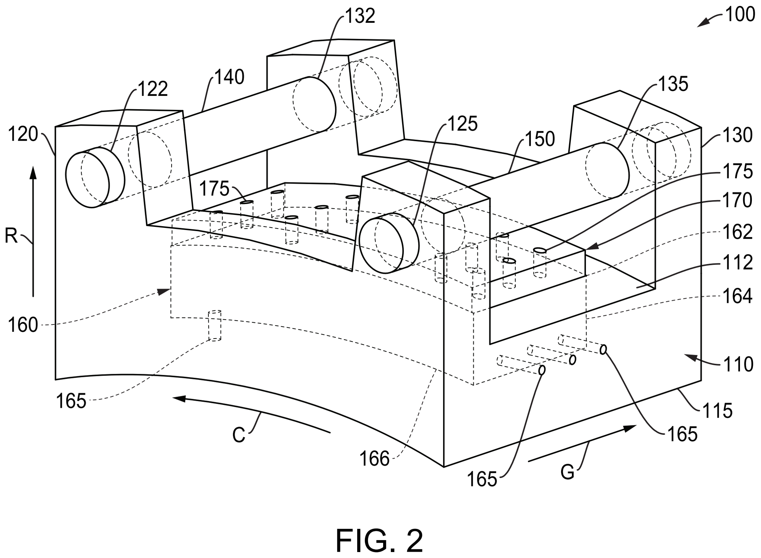

Fig. 2 illustrates a CMC component, specifically a blade outer air seal (BOAS) segment 100. In this figure, direction R indicates the radial direction, direction G indicates the axial direction or the direction of flow of hot gases through an engine, and direction C indicates a circumferential direction. The segment 100 includes a base 110 having a radial outer surface 112 and a radial inner surface 115. As shown in this embodiment, the radial outer surface 112 has a convex shape and the radial inner surface 115 has a concave shape. Segment 100 further includes a forward flange structure 120 and an aft flange structure 130. These two flange structures each extend from the radial outer surface 112 of the base 110. Flange structures 120, 130 are load bearing features and provide means for attaching the CMC component to another structure, for example, the outer casing of an engine. The base 110 and flanges structures 120, 130 are made of a CMC material comprising a plurality of ceramic fiber plies and a ceramic matrix.

The flange structures 120, 130 are provided with openings to permit the attachment of retention/supporting hardware. As shown in Fig. 2, the forward flange structure 120 has a first opening 122 and a second opening 125. The aft flange structure also has a first opening 132 and a second opening 135. Also shown in Fig. 2 are attachment pins 140 and 150. The first attachment pin 140 passes through the first opening 122 of the forward flange structure 120 and the first opening 132 of the aft flange structure 130. The second attachment pin 150 passes through the second opening 125 of the forward flange structure 120 and the second opening 135 of the second flange structure 130.

The base 110 is also provided with a cooling cavity 160. The cooling cavity 160 extends from the outer radial surface 112 of the base 110 into an interior region of the base 110 and has a cavity opening 162 at the outer radial surface of the base. The cooling cavity 160 is defined by cavity side walls 164 and a cavity bottom wall 166. Additionally, the cooling cavity 160 can be provided with one or more cooling air outlets 165 to provide for the discharge of cooling air from the cooling cavity. These cooling air outlets 165 can have an outlet discharge opening that is in radial inner surface 115 such that the discharged cooling air can provide a gas film cooling of radial inner surface 115. Alternatively, cooling air outlets 165 can have an outlet discharge opening in a side wall of the base 110 such that the discharged cooling air can provide a flow cooling to the region between adjacent BOAS segments. In Fig. 2, the cooling cavity 160 is covered by a cover plate or impingement plate 170 in which or more cooling holes 175 are provided to allow cooling air to enter the cooling cavity 160 through the cover plate/impingement plate 170.

The cooling cavity 160 can be formed in the base prior to densification of the CMC preform by precutting the fiber plies that are to be laid up to form the preform with a cavity or by cutting (machining) the cavity into the preform once the plies are laid up. Alternatively, the cooling cavity can be created by machining after an initial pre-densification, such as by chemical vapor infiltration (CVI), or after final densification.

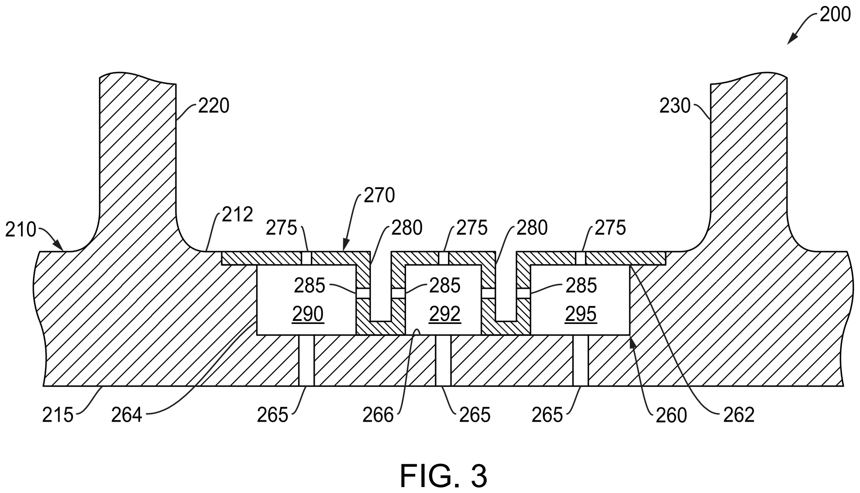

Fig. 3 shows an embodiment of a BOAS segment 200 having a cover plate with walls for cooling cavity segmentation in accordance with the present disclosure. The segment 200 includes a base 210 having a radial outer surface 212 and a radial inner surface 215. Segment 200 further includes a forward flange structure 220 and an aft flange structure 230 which each extend from the radial outer surface 212. The base 210 and flanges structures 220, 230 are made of a CMC material comprising a plurality of ceramic fiber plies and a ceramic matrix.

The base 210 is also provided with a cooling cavity 260. The cooling cavity 260 extends from the outer radial surface 212 of the base 210 into an interior region of the base 210 and has a cavity opening 262 at the outer radial surface 212. The cooling cavity 260 is defined by cavity side walls 264 and a cavity bottom wall 266. Additionally, the cooling cavity 260 can be provided with one or more cooling air outlets 265 through the base 210 to provide for the discharge of cooling air from the cooling cavity. These cooling air outlets 265 can have an outlet discharge opening that is in the radial inner surface 215 such that the discharged cooling air can provide gas film cooling of radial inner surface 215. Alternatively, cooling air outlets 265 can have an outlet discharge opening in a side wall of the base 210 such that the discharged cooling air can provide a flow cooling air to the region between adjacent BOAS segments.

In Fig. 3, the cooling cavity opening 262 is covered by a cover plate or impingement plate 270 in which or more cooling inlets 275 are provided to allow cooling air to enter the cooling cavity 260 through the cover plate/impingement plate 270. In Fig. 3, an edge region of cover plate 270 rests on a shoulder formed in the radial outer surface 212 around the perimeter of the cooling cavity opening 262. Alternatively, cover plate 270 can rest on the radial inner surface 215. In either case the cover plate 270 can be held in position by a variety of means such as retainer clamps or clips (not shown).

Extending downwards from cover plate 270 are one or more segmentation walls 280 which function to segment the cooling cavity into cooling subcavities 290, 292, 295. Segmentation walls 280 extend downward from cover plate 270 and contact the cavity bottom wall 266. In this embodiment, the segmentation walls 280 have a constant height such that the depth of the cooling cavity beneath the cover plate is uniform. It should be noted that while in Fig. 3 the segmentation walls 280 are shown is extending in a circumferential direction, segmentation walls 280 can be oriented in other ways, for example, they can be oriented in an axial direction.

In the embodiment of Fig. 3, each segmentation wall 280 is a U-shaped double wall structure wherein the space between the double walls can be in fluid communication with the region above the cover plate. As a result, the walls of the U-shaped double wall structure can be provided with further cooling inlets 285 to allow cooling air to flow though the space between the double walls of a segmentation wall 280 and into the cooling cavity.

Thus, in operation, cooling air flowing over the radial outer surface 212 can pass into the cooling cavity through cover plate into each of the cooling subcavities 290, 292, 295 via cooling inlets 275 and optionally cooling inlets 285. The cooling air then flows through cooling subcavities 290, 292, 295 and is discharged from the cooling subcavities 290, 292, 295 via a cooling air outlet 265. The cooling outlets 265, as mentioned above, can be within the base 210 of the CMC component. Alternatively, cooling outlets 265 can be within the cover plate 270 such that cooling air can enter into a cooling subcavity through cover plate at one end of the cooling subcavity and exit the cooling subcavity through cover plate at another end the cooling subcavity.

The flow through the channels/subcavities can be controlled/regulated in a variety of ways. For a given subcavity, the flow of cooling air into the subcavity can be controlled/regulated by the number of cooling inlets 275, 285 for that subcavity, and the flow rate through the channel/subcavity can be controlled/regulated by the number of cooling air outlet 265. Additionally, the positioning of cooling inlets 275, 285 can control the flux of cooling air within regions of the subcavity.

The segmentation wall 280 contacts the cavity bottom wall 266. If some leakage of cooling air between adjacent channels/subcavities, then the cavity bottom wall 266 can be left unfinished, i.e., in its rough form after densification. Alternatively, to provide a better seal between the segmentation wall 280 and the cavity bottom wall 266, the cavity bottom wall 266 can be machined to provide a smoother surface. In a further alternative, the cavity bottom wall 266 can be provided with a machinable coating, for example, a mullite layer, which then can be machined to a desired smoothness.

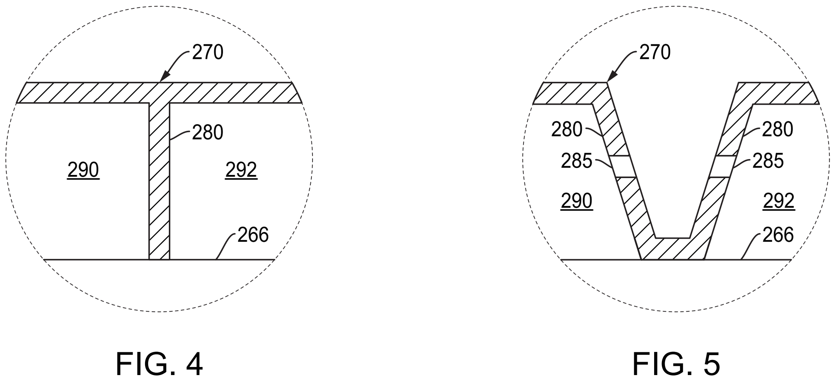

Figs. 4 and 5 show different embodiments of segmentation wall 280. Fig. 4 shows segmentation wall 280 as a single wall structure, rather the double wall structure of Fig. 3. In this embodiment, segmentation wall 280 does not have cooling inlets 285. Fig. 5 shows segmentation wall 280 as a V-shaped double wall structure. As in the U-shaped embodiment of Fig. 3, in the segmentation wall 280 with a V-shaped double wall structure the space between the double walls can be in fluid communication with the region above the cover plate. As a result, the double walls can be provided with further cooling inlets 285 to allow cooling air to flow though the space between the double walls of a segmentation wall 280 and into the cooling cavity.

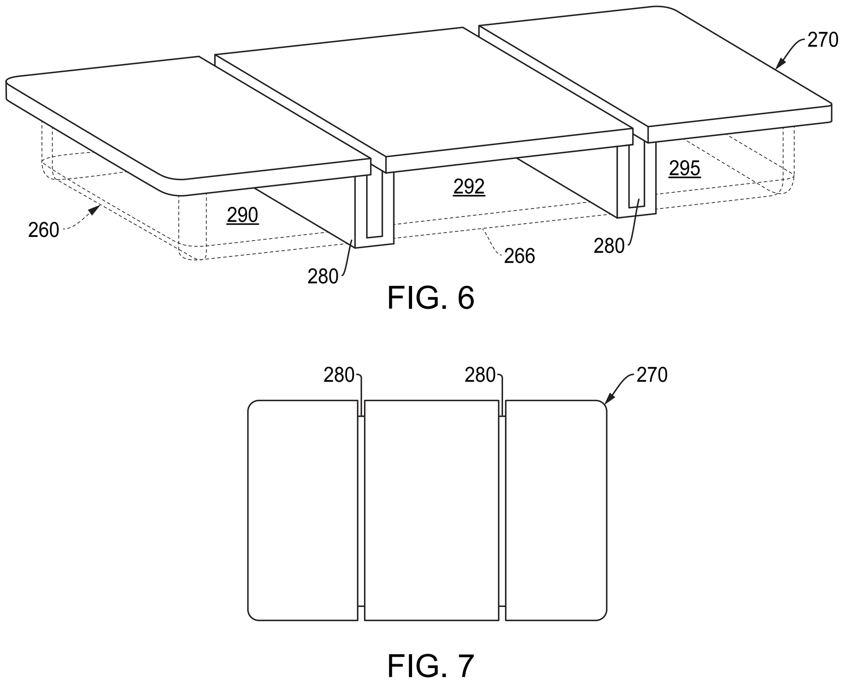

Fig. 6 is a top perspective view of the BOAS segment of Fig. 3. The cooling cavity 260 is segmented into cooling subcavities by segmentation walls 280 which extend downward from cover plate 270. The segmentation walls 280 have a U-shaped double wall structure. Fig. 7 shows a top view of the cover plate 270 of Fig. 3. As shown, cover plate 270 has segmentation walls 280 with a U-shaped double wall structure.

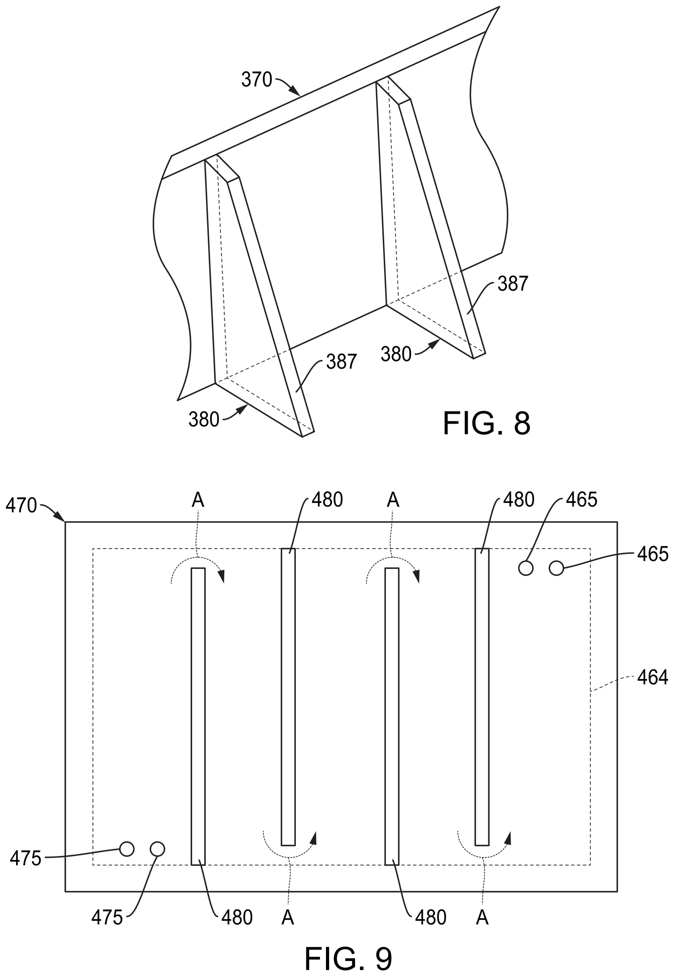

Fig. 8 shows side a modification of the cover plate 370. In this embodiment, the height of segmentation walls 380 vary. Specifically, the bottom surface 387 is angled. As a result, when the bottom surface is contact with the cavity bottom wall, the cover plate 370 is positioned at an angle. The angling of cover plate 370 varies the depth of the cooling subcavities and thus modify the flux of cooling air therethrough. While segmentation walls 380 are shown in Fig. 8 as a single walled structure it should be understood that segmentation walls 380 can be a double walled structure such as the U-shaped and V-shaped structures discussed above.

Fig. 9 shows a bottom view of a cover plate embodiment wherein the segmentation walls create a circuitous cooling pathway. Fig. 9 shows a bottom view of cover plate 470 wherein segmentation walls 480 extend out of the plane of the figure towards the viewer and form a circuitous cooling pathway. The dotted line represents the cavity side walls 464. One or more cooling inlets 475 are provided in cover plate 470 at a first end of the circuitous cooling pathway. Cooling air flows around the segmentation walls 480 in circuitous manner as shown by arrows A. The cooling air then is discharged from the cooling cavity by one or more cooling outlets 465 provided in cover plate 470 at a second end of the circuitous cooling pathway.

While the present disclosure has been particularly described, in conjunction with specific preferred embodiments, it is evident that many alternatives, modifications and variations will be apparent to those skilled in the art in light of the foregoing description. It is therefore contemplated that the appended claims will embrace any such alternatives, modifications and variations as falling within the true scope of the present disclosure.

## Claims

1. A ceramic matrix composite (CMC) component (100; 200) comprising:
a ceramic matrix composite substrate having a radial outer surface (112; 212) and a radial inner surface (115; 215), the substrate comprising a plurality of ceramic fiber plies and a ceramic matrix,
at least one cooling cavity (160; 260) within the substrate that extends from the radial outer surface (112; 212) of the substrate into an interior region of the substrate, the at least one cooling cavity (160; 260) having a cavity opening (162; 262) at the outer radial surface (112; 212) of the substrate, and the at least one cooling cavity (160; 260) being defined by cavity side walls (164; 264; 464) and a cavity bottom wall (166; 266), and
a cover plate (170; 270; 370; 470) covering the cavity opening (162; 262) of the at least one cooling cavity (160; 260), the cover plate (170...470) having one or more cooling air inlets (175; 275, 285; 475) to permit cooling air to flow from a region above the cover plate (170...470) into the cooling cavity (160; 260), the cover plate (170...470) having an outer surface facing the region above the cover plate (170...470) and an inner surface facing the cavity bottom wall (166; 266);
wherein the cover plate (170...470) further comprises one or more walls (280; 380; 480) extending downward from the inner surface of the cover plate (170...470) to the cavity bottom wall (266) thereby dividing the cooling cavity (260) into a plurality of cooling subcavities (290, 292, 295) and/or creating a circuitous cooling pathway within the cooling cavity (160; 260).

2. The CMC component to according to claim 1, wherein the one or more walls (280; 380; 480) extending downward from the inner surface of the cover plate (170...470) divide the cooling cavity (260) into a plurality of cooling subcavities (290, 292, 295), and optionally each cooling subcavity (290, 292, 295) has at least one cooling air inlet (175...475) in the cover plate (270) and at least one cooling air outlet (165; 265; 465).

3. The CMC component to according to claim 1 or 2, wherein the one or more walls (280; 380; 480) extending downward from the inner surface of the cover plate (170...470) create a circuitous cooling pathway within the cooling cavity (260), optionally the pathway having a first end and a second end, and the cooling plate (170...470) having at least one cooling air inlet (275, 285; 475) for introducing air into the first end of the pathway and further having at least one cooling air outlet (465) for discharging air from the second end of the pathway.

4. The CMC component according to claim 1, 2 or 3, wherein the substrate further includes at least one cooling air outlet channel (165; 265; 465) that provides fluid communication between an interior of the at least one cooling cavity (160; 260) beneath the cover plate (170...470) and an exterior of the CMC component.

5. The CMC component according to any preceding claim, wherein the one or more walls (280; 480) extending downward from the inner surface of the cover plate (270; 470) have a constant height such that the depth of the cooling cavity (260) beneath the cover plate (270; 470) is uniform.

6. The CMC component according to any of claims 1 to 4, wherein the one or more walls (380) extending downward from the inner surface of the cover plate (370) have a varying height such that the cover plate (370) is angled with respect to the bottom wall of the cooling cavity and the depth of the cooling cavity beneath the cover plate (370) varies.

7. The CMC component according to any preceding claim, wherein the cover plate (170...470) is made from ceramic matrix composite material or from metallic material.

8. The CMC component according to any of claims 1 to 6, wherein the cover plate (170...470) is made from Ni-based or Co-based superalloy metal.

9. The CMC component according to any preceding claim, wherein the bottom wall (166; 266) of the cooling cavity (160; 260) is provided with a machinable coating, and optionally the machinable coating comprises a mullite layer.

10. The CMC component to according to any preceding claim, wherein the component is a combustor liner or a blade outer air seal (BOAS) segment (100; 200).

11. A BOAS assembly comprising a plurality of BOAS segments (100; 200), each according to the CMC component of any of claims 1 to 9, wherein the BOAS segments (100; 200) are arranged to form an annular shaped structure.

12. A method of controlling cooling air flow within a CMC component (100; 200), the method comprising:
providing a CMC component (100; 200) comprising:
a base (110; 210) having a radial outer surface (112; 212) and a radial inner surface (115; 215), the base (110; 210) comprising a plurality of ceramic fiber plies and a ceramic matrix, and
at least one cooling cavity (160; 260) within the base (110; 210) that extends from the radial outer surface (112; 212) of the base (110; 210) into an interior region of the base (110; 210), the at least one cooling cavity (160; 260) having a cavity opening (162; 262) at the outer radial surface (112; 212) of the base (110; 210), and the at least one cooling cavity (160; 260) being defined by cavity side walls (164; 264; 464) and a cavity bottom wall (166; 266), and
covering the cavity opening (162; 262) of the at least one cooling cavity (160; 260) with a cover plate (170; 270; 370; 470), the cover plate (170...470) having one or more cooling air inlets (175; 275, 285; 475) to permit cooling air to flow from a region above the cover plate (170...470) into the cooling cavity (160; 260), the cover plate (170...470) having an outer surface facing the region above the cover plate (170...470) and an inner surface facing the cavity bottom wall (166; 266);
wherein the cover plate (170...470) further comprises one or more walls (280; 380; 480) extending downward from the inner surface of the cover plate (170...470) to the cavity bottom wall (266) thereby dividing the cooling cavity (260) into a plurality of cooling subcavities (290, 292, 295) and/or creating a circuitous cooling pathway within the cooling cavity (260).

13. The method according to claim 12, wherein the one or more walls (280; 380; 480) extending downward from the inner surface of the cover plate (170...470) to the cavity bottom wall (266) divide the cooling cavity (260) into a plurality of cooling subcavities (290, 292, 295), and optionally each cooling subcavity (290, 292, 295) has at least one cooling air inlet (175...475) in the cover plate (170...470) and at least one cooling air outlet (165; 265; 465).

14. The method according to claim 12 or 13, wherein the one or more walls (280; 380; 480) extending downward from the inner surface of the cover plate (170...470) to the cavity bottom create a circuitous cooling pathway within the cooling cavity, optionally the pathway having a first end and a second end, and the cooling plate (170...470) having at least one cooling air inlet (275, 285; 475) for introducing air into the first end of the pathway and further having at least one cooling air outlet (465) for discharging air from the second end of the pathway.

15. A turbine engine (20) comprising:
a fan section (22), a compressor section (24), a combustion chamber (26), and a turbine section (28), the turbine section (28) including at least one rotor and one or more turbine blade(s) extending radially outwardly from the at least one rotor; and
a blade outer air seal assembly positioned between the one or more turbine blade(s) and an outer casing to the engine (20);
wherein the blade outer air seal assembly is formed of a plurality blade outer air seal segments (100; 200), each blade outer air seal segment (100; 200) according to the CMC component of any of claims 1 to 9.
